# EUROPEAN PATENT SPECIFICATION

(11) **EP 3 314 593 B1**
(45) Date of publication and mention of the grant of the patent: **12.08.2020**
(21) Application number: 16738376.9
(22) Date of filing: 27.06.2016
(51) Int. Cl.: G08B 21/22

(54) **ELECTRONIC SURVEILLANCE SYSTEM AND METHOD**
SYSTEM UND VERFAHREN ZUR ELEKTRONISCHEN ÜBERWACHUNG
SYSTÈME ET PROCÉDÉ DE SURVEILLANCE ÉLECTRONIQUE

(30) Priority: 25.06.2015 CH 9142015
(43) Date of publication of application: 02.05.2018
(73) Proprietor: Geosatis SA, 2340 Le Noirmont (CH)
(72) Inventor: FERNANDES DEMETRIO, José Carlos, 2338 Les Emibois (CH)
(74) Representative: reuteler & cie SA
(86) International application number: PCT/EP2016/064870
(87) International publication number: WO 2016/207439

(56) References cited:
- EP-A1- 2 608 156
- WO-A1-2011/003458
- US-A1- 2005 192 741
- US-A1- 2007 023 496
- US-A1- 2007 273 537
- US-A1- 2010 109 864

## Description

### Technical Field

The present invention relates to electronic surveillance systems and methods, in particular such systems and methods incorporating the use of electronic surveillance bracelets.

### State of the art

Presently, electronic surveillance bracelets are often used as an alternative to incarceration for persons convicted of a crime, or as an alternative to remanding an individual into custody while awaiting trial. Such bracelets are typically worn around the lower leg or the ankle, and utilise a satellite positioning system such as GPS (Global Positioning System) or GNSS (Global Navigation Satellite System) to determine the location of the wearer. This location is communicated to the relevant authorities, via mobile telephone signals, mobile internet or similar to a remote base station, or by communication with a local base station via WiFi, Bluetooth or similar with subsequent re-broadcast via wired or mobile Internet, wired or mobile telephony, radio etc. As a result, limitations of free movement such as a curfew or house arrest, no-go areas and so on can be more easily enforced, and the wearer can more easily be found if he absconds.

An example of such an electronic surveillance bracelet for use in such a surveillance system is disclosed in the patent applications EP 2 608 156 and EP 2 608 157 in the name of the present applicant.

Furthermore, more comprehensive surveillance systems have been developed which incorporate use of such electronic surveillance bracelets in combination with, for instance, alcohol breath testers or testers for other chemical or pharmacological substances, so as to enforce a prohibition on their use by the wearer of the bracelet. Examples of such combined systems are mentioned for instance in documents US2007/273537 and WO 2008/143379. This latter document in particular describes a system incorporating a telephone comprising an alcohol breath tester, which is a specialised device incurring considerable expense.

However, such systems require separate verification of the identity of the person under surveillance, to prevent other people from taking the test so as to cheat the system. This requires a high degree of specialization for the components of the system, increasing cost. In the case of WO 2008/143379, the telephone with incorporated alcohol sensor is used to permit identification of the person under surveillance by voice.

Furthermore, current technology is poor at localization of a bracelet wearer in the absence of usable GPS signals.

An aim of the present invention is thus to propose such an electronic surveillance system and corresponding method of electronic surveillance that is exempt from these disadvantages, presents greater flexibility in the degree and type of surveillance possible, can use as many off-the-shelf components as possible, and is thus as economic as possible to implement.

### Disclosure of the invention

This object of the invention is attained by an electronic surveillance system comprising an electronic surveillance bracelet adapted to be secured around a limb of a wearer, the electronic surveillance bracelet comprising an energy source such as a battery, a processing unit, an identification generator, a localisation system such as a GPS and/or radio beacon-based system, and at least one wireless communication system, such as a mobile telephone or mobile internet system, adapted to communicate with a base station.

According to the invention, the wireless communication system is adapted to receive communication from at least one terrestrially-based further device, for instance by WiFi, Bluetooth, Zigbee, short-range radio, or similar, and to transmit a result of this communication to the base station together with an identification signal generated by the identification generator in order to tag said result with the identification of the electronic surveillance bracelet. It should be noted that this further device is supplemental to the bracelet itself and to the base station, and "further device" should not be construed in any way as being the base station itself. Furthermore, by "a result of this communication" should be understood receipt of information or data such as raw test results, processed test results (e.g. binary positive/negative results, classified results and so on), identification signals/numbers received from the further device, success or failure of (attempted) communication (e.g. in case the further device addressed is out of range, a null result would equally be a result of said communication), received signal strength, received signal frequency, type of signal encoding, protocols used, and so on. Such communication may be one-way or two-way, and may simply be incoming communication from a further device which acts as a beacon, transmitting a signal without receiving one itself.

As a result, a result of the communication between the further device and at least one the electronic surveillance bracelet is re-transmitted to the base station, and is thus tagged with the identification signal identifying the bracelet, which may simply be the usual identification signal transmitted by the wireless communication system of the bracelet. This serves several ends, including the possibility of using standard, off-the-shelf further devices, which do not themselves need to be programmed with the identity of the user, since the identity of the user is confirmed by the identification signal of the bracelet. The bracelet thus performs identification of the wearer and coordinates the communications within the surveillance system.

Advantageously, the at least one further device is a chemical sensor system adapted to carry out a test to detect a foreign substance such as alcohol, pharmaceuticals or drugs, said chemical sensor system being provided with a further wireless communication system adapted to communicate with said at least one wireless communication system in the electronic surveillance bracelet. The fact that identification of the user takes place in the bracelet, which is attached to the wearer, rather than by the chemical sensor system itself, reduces the risk of fraud in administering the test: the chemical sensor system must be within sufficient proximity to the bracelet that communication can take place, preventing the bracelet wearer from simply giving the chemical sensor system to another individual who then takes the test. Furthermore, as indicated above, a generic off-the-shelf chemical sensor system, such as a Bluetooth-equipped alcohol breath tester, can be used without modification.

Advantageously, the electronic surveillance system further comprises an interlock system adapted to be installed in a vehicle, the interlock system being adapted to communicate wirelessly with said electronic surveillance bracelet in order to permit or to prevent use of the vehicle based on a result of said test. Thus, a wearer of a bracelet can be prevented from operating a vehicle when under the influence of alcohol or drugs.

Advantageously, the at least one further device is a wireless beacon (which is not the base station) adapted to be installed in a building. GPS signals are often weak or non-existent inside buildings, and thus a beacon system can supplement a GPS system for localization of an individual within his home or workplace, within a prison, or within any other convenient enclosed location.

Advantageously, the further device is a further electronic surveillance bracelet. Each electronic surveillance bracelet can be adapted to communicate an identification signal with the other electronic surveillance bracelet. Thus, it can be determined which bracelet wearers were meeting at what time, and this information can be used for e.g. enforcing a meeting prohibition.

Advantageously, the wireless communication bracelet can comprise a memory adapted to store said result of communication with said at least one further device. Thus, in the case in which communication with the base station is interrupted, a record of all communications or attempted communications with any or all of the further devices.

Advantageously, the electronic surveillance bracelet comprises a motion sensor system, and wherein the processing unit is adapted to identify classes of movements of the bracelet based on an output of the motion sensor system. Such detected classes of movement can be transmitted to the base station so that the competent authorities can better observe the activities of the individual under surveillance, and detect prohibited activities such as attempting to remove the bracelet, being drunk, and so on.

The object of the invention is likewise attained by a method of performing electronic surveillance of an individual, comprising the steps of:
- providing an electronic surveillance system according to one of claims as defined above;
- securing the electronic surveillance bracelet around a limb of a wearer;
- attempting to initiate one or two-way communication between the electronic surveillance bracelet and the at least one further device, this communication comprising at least attempting to receive a signal from the further device;
- initiating communication between the electronic surveillance bracelet and the base station;
- transmitting a result of said communication with said further device, together with an identification signal generated by the identification generator, to a base station in order to tag said result with the identification of the electronic surveillance bracelet;
- receiving said result transmitted by the wireless communication system at the base station.

This method presents the same advantages as the system itself, as indicated above. The following advantageous embodiments likewise present the same advantages as the corresponding systems.

Advantageously, the electronic surveillance system comprises a chemical sensor system adapted to communicate wirelessly with the electronic surveillance bracelet, the method further comprising the steps of:
- performing a chemical test by means of the chemical sensor system; subsequently
- transmitting a result of said test to the electronic surveillance bracelet; subsequently
- performing said step of transmitting a result of said test together with an identification signal generated by the identification generator to a base station.

Further advantageously, the electronic surveillance system further comprises an interlock system adapted to be installed in a vehicle to permit or prevent its use, the method further comprising the steps of:
- performing a chemical test by means of the chemical sensor system; subsequently
- transmitting a result of said test to the electronic surveillance bracelet ; subsequently
- transmitting said result of said test to said interlock system;
- permitting or denying use of said vehicle.

Thus, all components of the system are provided with the necessary information to permit or deny the bracelet wearer use of the vehicle. It should further be noted that either the chemical sensor system, the bracelet or the interlock system can determine whether the bracelet wearer can operate the vehicle, the results of the test being either raw data, or pass/fail information as appropriate.

Advantageously, the at least one further device is at least one wireless beacon, the method further comprising steps of:
- communicating with said wireless beacon;
- transmitting a result of said communication to the base station.

Advantageously, the at least one further device is at least one other electronic surveillance bracelet, the method further comprising steps of:
- receiving at said electronic surveillance bracelet an identification signal from the other electronic surveillance bracelet;
- transmitting an identification signal received from the other electronic surveillance bracelet to the base station together.

Advantageously, the method further comprises steps of:
- comparing the identification signal received from the other electronic surveillance bracelet with a list of identification signals associated with individuals with whom the wearer is not allowed to interact;
- if the identification signal received from the other electronic surveillance bracelet is comprised in said list, informing an authority and/or activating an audible and/or visual alarm on the wearer's electronic surveillance bracelet.

This comparison is carried out in the bracelet, which can thus be performed even in the absence of communication with the base station, or alternatively can be carried out remotely and said alarm is activated in response to a command sent via said base station.

Advantageously, the method further comprises the steps of receiving communication from a plurality of said further devices, such as a number of Wi-Fi networks, mobile telephone masks, radio transmitters, shop RFID portals, or similar, comparing a result of each of said communications with a database of further devices, and determining the location of the electronic surveillance bracelet based on said comparison.

As a result, the location of the wearer of the bracelet can be determined even in the absence of usable GPS signals.

Advantageously, the result of each of said communications comprises at least one identifier of the corresponding further device, such as at least one of transmission frequency, type of signal encoding, protocols used in the transmission, at least one identification code such as an IP address, device name, type of device, network name.

Advantageously, the method further comprises determining a relative signal strength between at least two signals received from corresponding further devices, this relative signal strength being compared with said database. The database may comprise information relating to the geographic location of a plurality of further devices and at least one of the identifiers associated with each further device. The database may also, or alternatively, comprise information relating to relative signal strength between at least two signals emanating from corresponding further devices, said relative signal strength being determined at a plurality of geographic locations by calculation and/or by measurement. As a result, a map of such further devices can be built up so as to assist in determining the whereabouts of the wearer of the surveillance bracelet.

### Brief description of the drawings

Further details of the invention are explained in the following description, in reference to the annexed figures, in which:
- Fig. 1 illustrates schematically a surveillance system according to the invention in its most generic form;
- Fig. 2 illustrates a variant of a surveillance system according to the invention, incorporating a vehicle interlock;
- Fig. 3 illustrates a further variant of a surveillance system according to the invention;
- Fig. 4 illustrates a yet further variant of a surveillance system according to the invention;

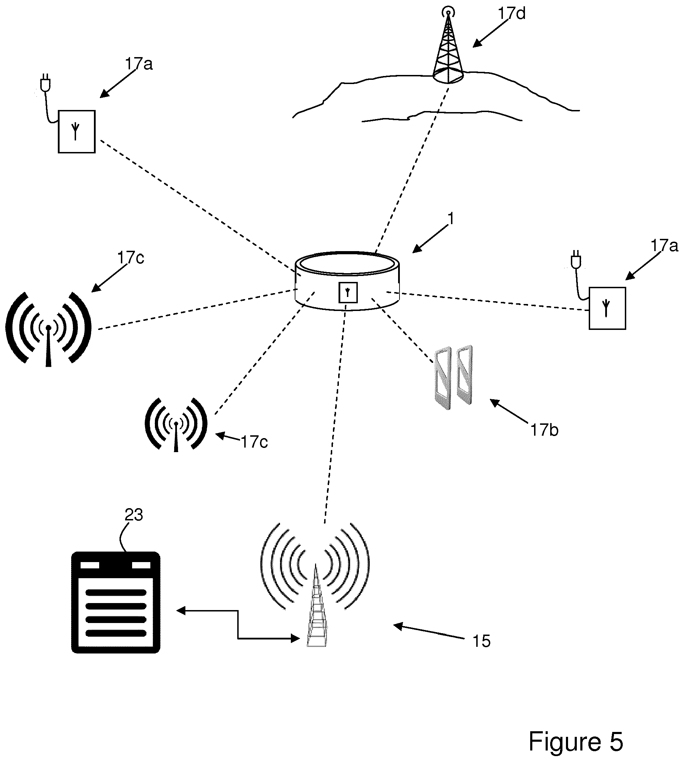

- Fig. 5 illustrates the use of a surveillance system according to the invention for localization of the bracelet in the absence of usable GPS signals; and
- Fig. 6 illustrates a simple embodiment of the principle illustrated in fig. 5.

### Embodiments of the invention

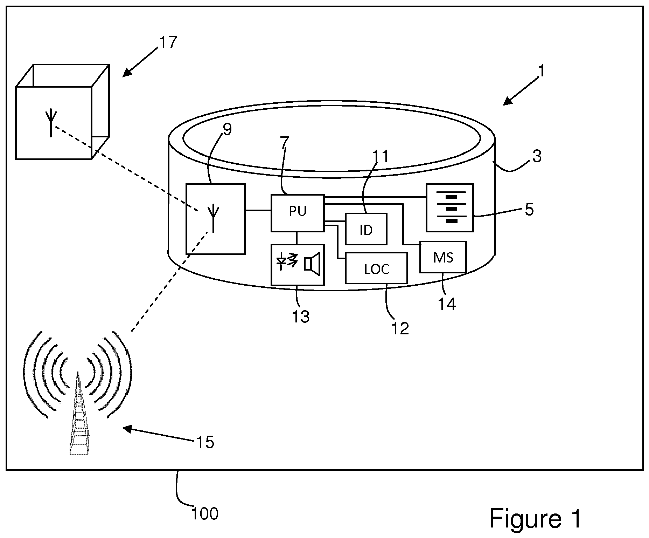

Figure 1 illustrates schematically an electronic surveillance system 100 according to the invention. Wireless links are illustrated in the figures by dashed lines.

Electronic surveillance system 100 comprises an electronic surveillance bracelet 1 comprising a body 3, here illustrated as a complete ring intended to be worn around the ankle or lower leg of a wearer. Other forms of bracelet 1 are known in the art and are equally applicable, such as those wherein body 3 is in the form of a box attached to the wearer's leg by a strap.

In the inside of body 3 is situated a power source 5, such as a rechargeable battery, a processing unit 7, a wireless communication system 9, an identification generator 11, a localisation system 12 such as a GPS (or similar) and/or beacon-based system for determining the location of the wearer of the bracelet 1, an optional motion sensor system 14, and an optional audible/visible alert module 13 comprising an alarm, flashing lights or similar.

Wireless communication system comprises one or more communication transponders 9, such as mobile telephone, 3G, 4G, WiFi, Bluetooth, Zigbee, infrared, radio, or any other convenient transponder, which may be integrated or situated separately in the wireless surveillance bracelet 1. This transponder is adapted to communicate with a base station 15, as is generally known, and also with at least one further device 17, as will become clear below. In the case of a local base station, i.e. one installed in a building, communication between the local base station 15 and communication transponder 9 would typically be via WiFi or short-range radio communication, whereas in the case of a central base station, which may simply be a mobile telephone network, a mobile telephone, 3G, 4G or similar connection would be typical. Both types of base station can naturally be integrated in the same system 100. Communication with further device 15 would typically be via WiFi, Bluetooth, Zigbee, infrared, a short-range radio link, or similar.

Identification generator 11 is of any convenient type, and may simply be a line of code executed by the processor 7 which contains the serial number or other identifying code of bracelet 1, or a location in a readable memory or on a storage medium with the same information stored therein. Alternatively, the identification generator 11 can be part of the wireless communication system 9, which identifies itself to the base station 15 as is standard during communication.

Further device 17 can be of any conceivable type, of which non-limiting examples and applications will be given below, and comprises a further wireless communication system (illustrated schematically by the antenna signal) adapted to communicate with the wireless communication system of the electronic surveillance bracelet 1.

In contrast to prior art systems, it is the wireless surveillance bracelet 1 which coordinates communication between the further device 17 and the base station 15, and also provides the required identification of the person under surveillance.

### Alcohol/drug/pharmaceutical detector

Further device 17 may be an alcohol, drug or pharmaceutical detector, either handheld, body worn, or stationary. Hand-held alcohol detectors, often known as breathalysers, are commonly available in electronic form, such as the SL-BLUE marketed by Soberlink, which is a commercially-available alcohol breath tester which comprises a Bluetooth link. Other breath, saliva, blood or urine-based testers for other substances, such as illegal drugs that the bracelet wearer is obliged not to take, or medication that the bracelet wearer is obliged to take, are equally applicable. Although the following description refers to an alcohol test, the same principle applies equally to any of the other tests mentioned.

For instance, the bracelet wearer may be subject to an alcohol prohibition and be required to take a self-administered alcohol breath test periodically during the day, or in response to an SMS or telephone call instructing him to do so. With the system proposed by the invention, the alcohol breath tester communicates the test result with the electronic surveillance bracelet 1 via e.g. a Bluetooth or other convenient link. The electronic surveillance bracelet 1 then re-transmits the test result to base station 15, together with the identification signal generated by the identification generator 11. The electronic surveillance bracelet 1 thus positively identifies the person without requiring a specialised and customised alcohol breath tester. Since the Bluetooth (or similar) link only has a range of several meters, the risk of fraud (e.g. another person taking the test instead of the intended subject) is reduced since the tester must be very close to the electronic surveillance bracelet 1. The same considerations apply in respect of drugs and pharmaceuticals for which use or abstention is obligatory for the wearer.

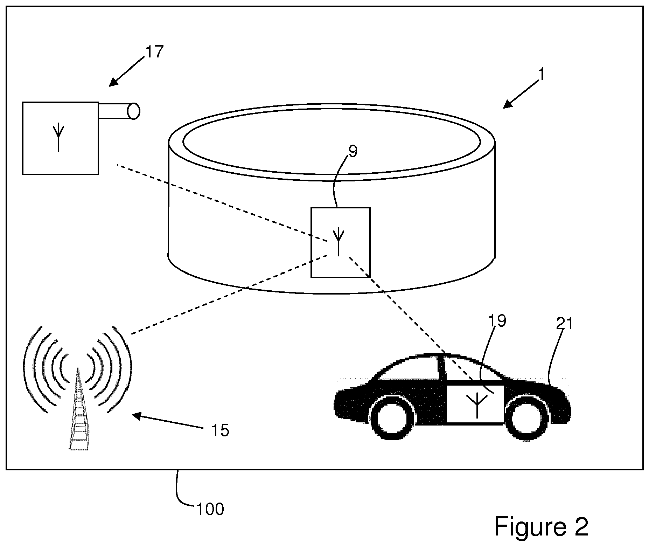

Figure 2 illustrates an extension of this concept. Please note that in this and subsequent figures, the electronic surveillance bracelet 1 is illustrated in simplified form, only the outer form thereof and wireless communication system 9 being shown.

In the embodiment of figure 2, further device 17 is, as indicated above, an alcohol, drug or pharmaceutical tester. Wireless surveillance system 100 further includes an interlock system 19 installed in a vehicle 21, which is adapted to permit or prevent starting of the vehicle based on certain parameters. Interlock system 19 comprises a further wireless communication system (illustrated schematically by the antenna symbol) adapted to communicate with the wireless communication system of the electronic surveillance bracelet 1.

For instance, as is known, the interlock system 19 may require an alcohol breath test to be carried out, and will not permit the vehicle to start until a negative breath test has been performed. In such a case, the electronic surveillance bracelet 1 communicates with the alcohol breath tester 17, receives the result from the tester 17, and communicates the result with the interlock system 19 together with the identity signal of the electronic surveillance bracelet 1. Interlock system 19 then permits or denies use of the vehicle 21 in the usual manner. It should be noted that the determination of whether to permit use of the vehicle 21 or not may take place either in the alcohol breath tester 17, the electronic surveillance bracelet 1, or the interlock system 19, the test results being transmitted in the system in an appropriate form. Furthermore, electronic surveillance bracelet 1 may also communicate the test result and/or the attempted use of vehicle 21 (determined e.g. by communication with the interlock system 19 while an alcohol test is carried out) to the base station 15. In the case of an attempted use of the vehicle while under the influence of alcohol, the relevant authorities can thus be notified. As such, a positive identification of the bracelet wearer can be effected when taking the test and attempting to start the vehicle, and the system 100 can use as many off-the-shelf components as possible.

The same principle applies in the case of drugs (illegal or legal) or pharmaceuticals. For instance, the bracelet wearer may be required to take mood-altering medication before driving a car, or conversely may be prohibited from driving after having taken a medication due to bad side effects. All of these conditions can be coordinated by the electronic surveillance bracelet 1 and/or by the interlock system 19.

Furthermore, in the case in which the bracelet wearer is not present in the vehicle, the interlock can be programmed to allow the vehicle to start, thus not restricting its use for non-bracelet-wearers.

A further aspect of controlling the behaviour of the wearer of the bracelet, which may be used in combination with or separate from interlock system 19, involves the use of optional motion sensor system 14, comprising one or more motion sensors such as accelerometers. The movement of the electronic surveillance bracelet 1 as measured by the motion sensor system 14 is distinctive for various movements and activities which can be classified by an appropriate algorithm run by the processing unit 7. This algorithm classifies the motion of the electronic surveillance bracelet 1 into one or more categories, such as (but not limited to) "stationary", "sleeping", "walking", "loitering", "jogging", "running", "sprinting", "playing sport", "attempting to remove bracelet", "walking drunk or on drugs ", "moving in vehicle", "driving a vehicle" and so on. These categories can be transmitted to the competent authorities, for instance as an independent check on an alcohol or drugs prohibition, to provide a quick response in case of an attempt to remove a bracelet, or to assist in finding a fugitive wearing an electronic surveillance bracelet 1. In its simplest form, the processing unit 7 can simply detect drunken movement such as staggering, and transmit a corresponding notification to the relevant authorities.

### Proximity to other electronic surveillance bracelets

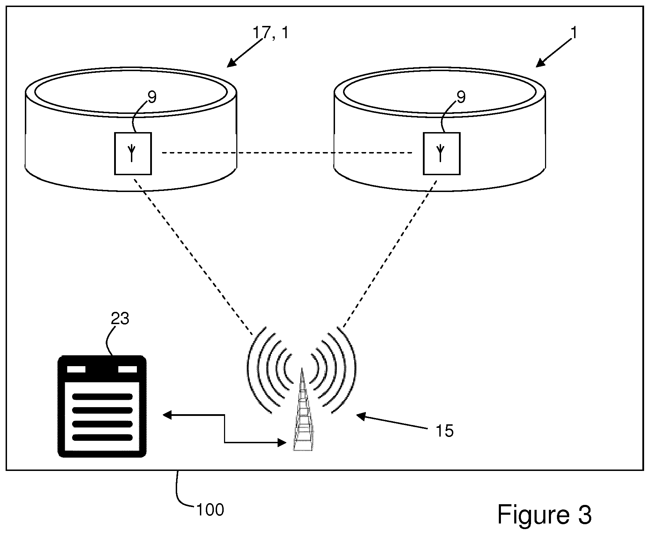

Figure 3 illustrates an embodiment in which further device 17 is simply another electronic surveillance bracelet 1 belonging to another wearer.

In certain cases, individuals placed under electronic surveillance are also subject to prohibitions on meeting with certain other individuals, such as criminal associates. In the case in which both of these individuals are subject to electronic surveillance and thus wear electronic surveillance bracelets, this prohibition can be enforced.

In the illustrated case, a first electronic surveillance bracelet 1 and a second electronic surveillance bracelet 1, 17 constituting further device 17 in respect of the first electronic surveillance bracelet 1 are in sufficient proximity that wireless communication can take place via respective wireless communication systems 9 (e.g. via Bluetooth, Zigbee, Wifi or similar). Each electronic surveillance bracelet 1, 17 when communicating with the other, transmits its own identification signal, a result of this communication (e.g. the identification signal which has been received) then being transmitted to the competent authorities via base station 15 together with the identification signal of the electronic surveillance bracelet 1 performing the transmission. These identification signals are then compared to a database 23 of meeting prohibitions, and if a prohibited meeting is determined to be taking place, the relevant authorities are alerted. In the case in which one or more of the electronic surveillance bracelets 1 comprises an alert module 13, the base station 15 can transmit a command to the electronic surveillance bracelet 1 to activate an audible or visual alert, thereby disrupting the prohibited meeting, if such action is indeed desirable.

Alternatively, the electronic surveillance bracelet 1 can be pre-programmed with a database of prohibited meetings, the alert module 13 being then actuated if desirable by the processing unit 7 of the electronic surveillance bracelet 1, and/or the relevant authorities can be alerted to the prohibited meeting.

In the case in which the electronic surveillance bracelet 1 is out of contact with base station 15, a record of communications with other electronic surveillance bracelets can be stored in a memory for subsequent transmission to the relevant authorities when communication with the base station 15 is re-established. For instance, the time and duration of meetings between bracelet-wearing individuals can be recorded for subsequent re-transmittal.

### Alert button

A similar principle can be applied to a so-called "alert button" used as a further electronic device 17. In the case that the wearer of the electronic surveillance bracelet 1 has health problems that would require immediate assistance, he may carry such an "alert button" which, in response to pressing a button alerts authorities that the wearer is undergoing a medical emergency. The result of communication in this case is a signal indicating that the button has been pressed. This concept has been used for a long time in combination with a conventional base station, mobile telephone or similar, however combination of such an alert button with an electronic surveillance bracelet 1 eliminates the need for further apparatuses in the case in which the patient already wears such an electronic surveillance bracelet 1

This principle can also be applied in the case of enforcement of a restraining order. The protected person who the restraining order is intended to protect can be given an alert button. Activation of the alert button by the protected person while the electronic surveillance bracelet is in range can then be used to signal breach of the restraining order and that the protected person is in danger. This also serves to reduce fraud in reported breach of restraining orders, since the alert button needs to be in wireless communication range with the electronic surveillance bracelet, otherwise pressing the button will have no effect. The same principle can also be applied to enforcing prohibitions on the wearer of the electronic surveillance bracelet in respect of visiting certain premises, such as a shop, a casino or similar, since such an alert button can be given to the establishment and situated at the reception desk or cash register.

Furthermore, the alert button can be adapted so as to communicate with the electronic surveillance bracelet 1 when it is in range and to identify itself thereto even in the case in which the alert button has not been activated. This can be used to detect breach of a restraining order of which the protected person is not in fact aware, such as in a stalking situation, or to nevertheless inform the authorities of the proximity of the protected person and the subject of the restraining order even if the protected person has for whatever reason not been able to manually actuate the alert button. In this case, the result of the communication with the alert button is an indication of it being in communication range with the bracelet 1. Alternatively, such an arrangement permits to distinguish between mere proximity between the two people, which may not be absolutely prohibited, and actual danger to the protected person in which case he or she can actuate the alert button.

It should also be noted that the alert button may also emit a signal if the bracelet 1 is in communication range, to alert the protected person to the proximity of the bracelet wearer.

### Proximity beacon

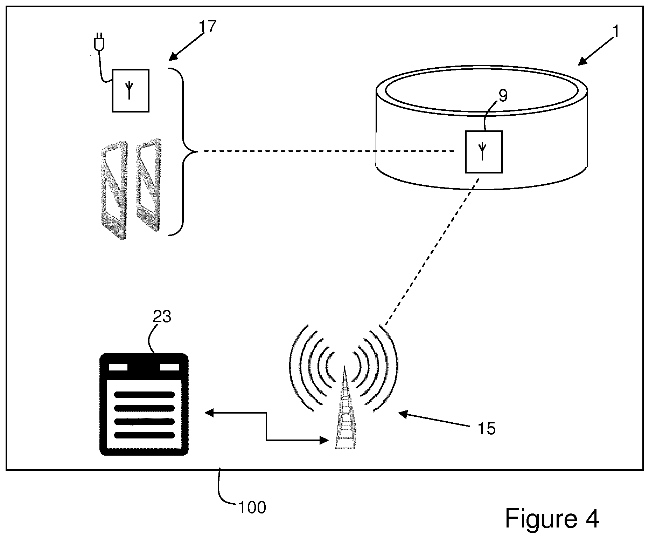

In a further embodiment as illustrated in Fig. 4, further device 17 is a proximity beacon such as a Bluetooth transponder, WiFi router, RFID portal or similar. GPS or other satellite signals are difficult or impossible to receive indoors, particularly in buildings constructed of metal, which act as a Faraday cage.

By using one or more such beacons, the location of the wearer in e.g. his home, workplace, or the confines or a prison, can be determined even in the absence of usable GPS signals, and communication between electronic surveillance bracelet 1 and the proximity beacon 17 can be communicated by the bracelet to the base station 15, e.g. via a mobile telephone link. It should be noted that this scheme is distinct from a conventional local base station system, wherein the local base station communicates the proximity of the bracelet 1 to the relevant authorities, e.g. via Internet, wired telephony, mobile telephony or other radio link. Off the shelf or specialised wireless routers, Bluetooth transponders, existing RFID shop portals and so on can be used, and the electronic surveillance bracelet 1 can be programmed to identify these transponders by their serial number, ID name, IP address or other identifying code, and can retransmit this code to the base station 15 together with the identification signal of the electronic surveillance bracelet 1. These transponders, if connected to a phone line or to the Internet, may also act as an auxiliary base station, transmitting information received from the electronic surveillance bracelet 1 to the relevant authorities.

Such an arrangement can be used to enforce a prohibition on being present in certain locations, such as particular shops, casinos, schools, airports, barracks, seaports, railway stations and so on. Such locations often have existing Wi-Fi transponders, RFID portals as antitheft measures, and so on, and it is thus a simple matter to visit these locations to determine what usable transponders are already present, and to record them the appropriate database 23 and/or in the bracelet 1 itself. In the case that such items are not already present at a location, a proximity beacon can be placed therein.

### Localisation by means of ambient electromagnetic transmission

The same basic principle discussed above in respect of a proximity beacon can be applied can be applied more generally and used to localise the wearer of the electronic surveillance bracelet 1 more generally, even in the absence of usable GPS satellite signals. The modern world is populated with large numbers of identifiable transponders, particularly in urban areas, which generate what is often known as electromagnetic pollution. Such transponders include Wi-Fi routers 17a, RFID portals 17b in shops, mobile telephone masts 17c, and even radio or television masts 17d. Each of these has at least one identifier such as a transmission frequency, type of signal encoding, protocols used, or at least one identification code such as an IP address, network name or similar.

A wireless security bracelet 1 situated at any given location will usually be able to receive signals from, i.e. receive communication from, at least one, normally several, such transponders. By knowing the location of such transponders and their identifying information (such as frequency, network name, IP address, or any other identifying code) and the relative signal strengths thereof as received by the wireless security bracelet 1, the location of the wearer of the wireless security bracelet 1 can be determined to a greater or lesser degree of accuracy depending on the number and type of devices 17 within the range of the wireless security bracelet 1.

A database 23 of such devices 17 can be built up over time, both through a priori knowledge, such as of mobile telephone towers, and by taking measurements in various locations to determine the approximate location of the various devices from which signals can be received and the signal strengths at a number of given locations. The database can be used to generate a map with which can be used to carry out triangulation based on the relative signal strengths of the signals received.

Such a system is particularly useful in highly built-up areas in which GPS signals cannot always be reliably received, and yet a large number of mobile telephone towers, Wi-Fi transponders and so on are present and identifiable. The database can be enhanced by taking real-world measurements of absolute and relative signal strengths at multiple geographic locations, thereby reducing errors relating to reflection of signals off of structures.

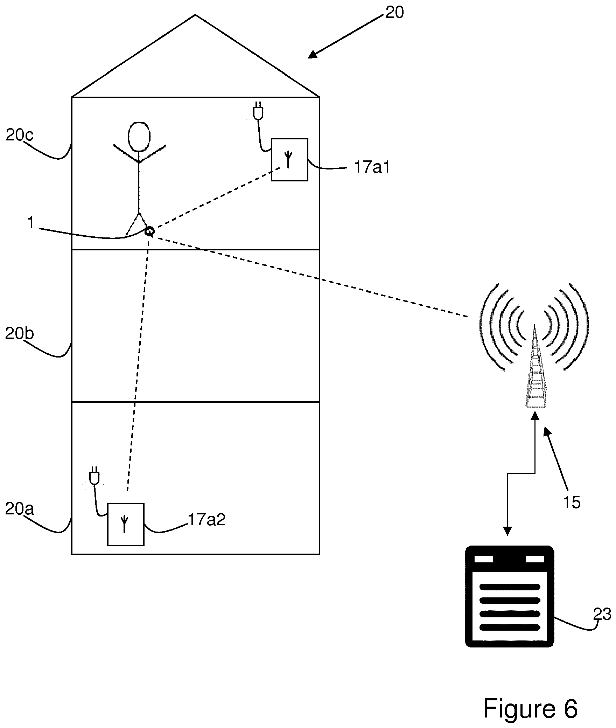

Figure 6 illustrates this principle in its simplest form, for the determination of the presence and location of the wearer of an electronic surveillance bracelet 1 in a building 20. Building 20 comprises 3 stories, basement 20a, ground floor 20b, and first floor 20c. By arranging two Wi-Fi routers or Bluetooth transmitters 17a1 and 17a2 on different floors, such as in the basement 20a and on the first floor 20c, these positions being recorded in database 23 or in the electronic surveillance bracelet 1 itself, the relative strengths of the signals received at the electronic surveillance bracelet 1 emanating from each of the transmitters 17a1, 17a2 permits localisation of the wearer of the bracelet 1 within the building 20 with a reasonable degree of accuracy. If signals are not received from either of the transmitters 17a1, 17a2, the wearer is probably no longer within building 20. This simple arrangement has practical use for instance in the case in which the wearer of the bracelet is obliged to be at his place of work in one part of the building 20, such as the basement 20a, between certain times of the day. For instance, if the signal strength received from transmitter 17a2 is 20% of that received from transmitter 17a1, the wearer is almost certainly on the first floor 20c. Likewise, if the signal strength received from transmitter 17a1 is 20% of that received from transmitter 17a2, the wearer is almost certainly in the basement 20a.

To improve the accuracy, measurements of the absolute and relative signal strengths may be taken at various locations within building 20, this information being entered into database 23.

Essentially, extension of this general concept to non-GPS localisation of the wearer of a surveillance bracelet 1 within a wider area is simply a matter of entering more transmitters into the database 23, and is enhanced by taking actual measurements.

It goes without saying that the same electronic surveillance bracelet 1 can communicate with multiple, different further devices 17, of any type and of any number. As a further exemple, further device 17 may be a wireless door lock and the electronic surveillance bracelet 1 may communicate therewith to allow or deny access to a building, access-controlled area of a building, container, vehicle or other enclosed space.

Although the invention has been described in terms of specific embodiments, variations thereto are possible without departing from the scope of the invention as defined in the appended claims. In particular, it is noted that further device 17 can be of any imaginable type in addition to those mentioned in detail above, such as but not limited to:
- a mobile telephone, smart phone, tablet computer or similar which the bracelet wearer is required to keep on their person and not give to third parties;
- a so-called connected bracelet comprising physiological sensors;
- a medical device for monitoring the health of the wearer.

## Claims

1. Electronic surveillance system (100) comprising an electronic surveillance bracelet (1) adapted to be secured around a limb of a wearer, the electronic surveillance bracelet (1) comprising an energy source (5), a processing unit (7), an identification generator (11), a localisation system (12), and at least one wireless communication system (9) adapted to communicate with a base station (15), **characterised in that** the wireless communication system (9) is adapted to receive communication from at least one terrestrially-based further device (17) and to transmit a result of this communication to said base station (15) together with an identification signal generated by the identification generator (11) in order to tag said result with the identification of the electronic surveillance bracelet.

2. Electronic surveillance system (100) according to claim 1, wherein the at least one further device (17) is a chemical sensor system (17) adapted to carry out a test to detect a foreign substance such as alcohol, pharmaceuticals or drugs, said chemical sensor system (17) being provided with a further wireless communication system adapted to communicate with said at least one wireless communication system (9) in the electronic surveillance bracelet (1).

3. Electronic surveillance system (100) according to claim 2, further comprising an interlock system (19) adapted to be installed in a vehicle (21), the interlock system (19) being adapted to communicate wirelessly with said electronic surveillance bracelet (1) in order to permit or to prevent use of the vehicle (21) based on a result of said test.

4. Electronic surveillance system (100) according to one of claims 1-3, wherein the at least one further device (17) is a wireless beacon adapted to be installed in a building.

5. Electronic surveillance system (100) according to one of claims 1-4, wherein the at least one further device (17) is a further electronic surveillance bracelet (1), wherein each electronic surveillance bracelet (1) is preferably adapted to communicate an identification signal with the other electronic surveillance bracelet (1).

6. Method of performing electronic surveillance of an individual, comprising the steps of:
- providing an electronic surveillance system (100) according to one of claims 1-5;
- securing the electronic surveillance bracelet (1) around a limb of a wearer;
- attempting to initiate communication between the electronic surveillance bracelet (1) and the said at least one further device (17);
- initiating communication between the electronic surveillance bracelet (1) and the base station (15);
- transmitting a result of said communication with said at least one further device (17), together with an identification signal generated by the identification generator (11), to a base station (15) in order to tag said result with the identification of the electronic surveillance bracelet; and
- receiving said result transmitted by the wireless communication system (9) at the base station (15).

7. Method according to claim 6, when depending upon claim 2 or 3, further comprising the steps of:
- performing a chemical test by means of the chemical sensor system (17); subsequently
- transmitting a result of said test to the electronic surveillance bracelet (1); subsequently
- performing said step of transmitting a result of said test together with an identification signal generated by the identification generator (11) to a base station (15).

8. Method according to claim 6 or 7, when depending upon claim 3, further comprising the steps of:
- performing a chemical test by means of the chemical sensor system (17); subsequently
- transmitting a result of said test to the electronic surveillance bracelet (1); subsequently
- transmitting said result of said test to said interlock system;
- permitting or denying use of said vehicle.

9. Method according to one of claims 6-8, when depending upon claim 5, further comprising the steps of:
- receiving at said electronic surveillance bracelet (1) an identification signal from the other electronic surveillance bracelet (1);
- transmitting an identification signal received from the other electronic surveillance bracelet (1) to the base station (15); and optionally further comprising the steps of:
- comparing the identification signal received from the other electronic surveillance bracelet (1) with a list of identification signals associated with individuals with whom the wearer is not allowed to interact;
- if the identification signal received from the other electronic surveillance bracelet (1) is comprised in said list, informing an authority and/or activating an audible and/or visual alarm on the wearer's electronic surveillance bracelet (1).

10. Method according to claim 9, wherein said comparison is carried out in the bracelet or remotely, wherein said alarm is activated in response to a command sent via said base station (15).

11. Method according to claim 6, further comprising the steps of:
- receiving communication from a plurality of said further devices (17);
- comparing a result of each of said communications with a database (23) of further devices;
- determining the location of the electronic surveillance bracelet (1) based on said comparison.

12. Method according to claim 11, wherein a result of each of said communications comprises at least one identifier of the corresponding further device (17), selected from the group consisting of transmission frequency, type of signal encoding, protocols used in the transmission, at least one identification code such as an IP address, device name, type of device and network name.

13. Method according to claim 11 or 12, further comprising determining a relative signal strength between at least two signals received from corresponding further devices (17), this relative signal strength being compared with said database (23).

14. Method according to one of claims 11 to 13, wherein said database (23) comprises information relating to the geographic location of a plurality of further devices (17) and at least one of said identifiers associated with each further device (17).

15. Method according to one of claims 11 to 14, wherein said database (23) comprises information relating to relative signal strength between at least two signals emanating from corresponding further devices (17), said relative signal strength being determined at a plurality of geographic locations.

## Patentansprüche

1. Elektronisches Überwachungssystem (100), das ein elektronisches Überwachungsarmband (1) umfasst, das angepasst ist, um ein Körperglied eines Trägers befestigt zu werden, wobei das elektronische Überwachungsarmband (1) eine Energiequelle (5), eine Verarbeitungseinheit (7), einen Identifikationserzeuger (11), ein Lokalisierungssystem (12) und mindestens ein drahtloses Kommunikationssystem (9), das angepasst ist, mit einer Basisstation (15) zu kommunizieren, umfasst, **dadurch gekennzeichnet, dass** das drahtlose Kommunikationssystem (9) angepasst ist, eine Kommunikation von mindestens einer erdgebundenen weiteren Vorrichtung (17) zu empfangen und ein Ergebnis dieser Kommunikation zusammen mit einem Identifikationssignal, das vom Identifikationserzeuger (11) erzeugt wird, zur Basisstation (15) zu übertragen, um das Ergebnis mit der Identifikation des elektronischen Überwachungsarmbands zu markieren.

2. Elektronisches Überwachungssystem (100) nach Anspruch 1, wobei die mindestens eine weitere Vorrichtung (17) ein chemisches Sensorsystem (17) ist, das angepasst ist, einen Test auszuführen, um eine fremde Substanz, wie etwa Alkohol, Medikamente oder Drogen zu detektieren, wobei das chemische Sensorsystem (17) mit einem weiteren Kommunikationssystem versehen ist, das angepasst ist, mit dem mindestens einen drahtlosen Kommunikationssystem (9) im elektronischen Überwachungsarmband (1) zu kommunizieren.

3. Elektronisches Überwachungssystem (100) nach Anspruch 2, das ferner ein Verriegelungssystem (19) umfasst, das angepasst ist, in einem Fahrzeug (21) installiert zu werden, wobei das Verriegelungssystem (19) angepasst ist, drahtlos mit dem elektronischen Überwachungsarmband (1) zu kommunizieren, um die Verwendung des Fahrzeugs (21) auf Basis eines Ergebnisses des Tests zu erlauben oder zu verhindern.

4. Elektronisches Überwachungssystem (100) nach einem der Ansprüche 1 bis 3, wobei die mindestens eine weitere Vorrichtung (17) ein drahtloser Beacon ist, der angepasst ist, in einem Gebäude installiert zu werden.

5. Elektronisches Überwachungssystem (100) nach einem der Ansprüche 1 bis 4, wobei die mindestens eine weitere Vorrichtung (17) ein weiteres elektronisches Überwachungsarmband (1) ist, wobei jedes elektronische Überwachungsarmband (1) vorzugsweise angepasst ist, ein Identifikationssignal mit dem anderen elektronischen Überwachungsarmband (1) zu kommunizieren.

6. Verfahren zum Durchführen der elektronischen Überwachung einer Person, das die folgenden Schritte umfasst:
- Bereitstellen eines elektronischen Überwachungssystems (100) nach einem der Ansprüche 1 bis 5;
- Befestigen des elektronischen Überwachungsarmbands (1) um ein Körperglied eines Trägers;
- Versuchen, eine Kommunikation zwischen dem elektronischen Überwachungsarmband (1) und der mindestens einen weiteren Vorrichtung (17) zu initiieren;
- Initiieren einer Kommunikation zwischen dem elektronischen Überwachungsarmband (1) und der Basisstation (15);
- Übertragen eines Ergebnisses der Kommunikation mit der mindestens einen weiteren Vorrichtung (17) zusammen mit einem Identifikationssignal, das vom Identifikationserzeuger (11) erzeugt wird, zu einer Basisstation (15), um das Ergebnis mit der Identifikation des elektronischen Überwachungsarmbands zu markieren; und
- Empfangen des Ergebnisses, das vom drahtlosen Kommunikationssystem (9) übertragen wird, an der Basisstation (15) .

7. Verfahren nach Anspruch 6, sofern von Anspruch 2 oder 3 abhängig, das ferner die folgenden Schritte umfasst:
- Durchführen eines chemischen Tests mit dem chemischen Sensorsystem (17); danach
- Übertragen eines Ergebnisses des Tests zum elektronischen Überwachungsarmband (1); danach
- Durchführen des Schritts des Übertragens eines Ergebnisses des Tests zusammen mit einem Identifikationssignal, das vom Identifikationserzeuger (11) erzeugt wird, zu einer Basisstation (15).

8. Verfahren nach Anspruch 6 oder 7, sofern von Anspruch 3 abhängig, das ferner die folgenden Schritte umfasst:
- Durchführen eines chemischen Tests mit dem chemischen Sensorsystem (17); danach
- Übertragen eines Ergebnisses des Tests zum elektronischen Überwachungsarmband (1); danach
- Übertragen des Ergebnisses des Tests zum Verriegelungssystem;
- Erlauben oder Untersagen der Verwendung des Fahrzeugs.

9. Verfahren nach einem der Ansprüche 6 bis 8, sofern von Anspruch 5 abhängig, das ferner die folgenden Schritte umfasst:
- Empfangen eines Identifikationssignals am elektronischen Überwachungsarmband (1) vom anderen elektronischen Überwachungsarmband (1);
- Übertragen eines Identifikationssignals, das vom anderen elektronischen Überwachungsarmband (1) empfangen wird, zur Basisstation (15); und das wahlweise ferner die folgenden Schritte umfasst:
- Vergleichen des Identifikationssignals, das vom anderen elektronischen Überwachungsarmband (1) empfangen wird, mit einer Liste von Identifikationssignalen, die mit Personen verknüpft sind, mit denen der Träger nicht interagieren darf;
- wenn das Identifikationssignal, das vom anderen elektronischen Überwachungsarmband (1) empfangen wird, in der Liste umfasst ist, Informieren einer Behörde und/oder Aktivieren eines akustischen und/oder eines visuellen Alarms am elektronischen Überwachungsarmband (1) des Trägers.

10. Verfahren nach Anspruch 9, wobei der Vergleich im Armband oder per Fernzugriff ausgeführt wird, wobei der Alarm in Reaktion auf einen Befehl, der via die Basisstation (15) gesendet wird, aktiviert wird.

11. Verfahren nach Anspruch 6, das ferner die folgenden Schritte umfasst:
- Empfangen einer Kommunikation von einer Vielzahl der weiteren Vorrichtungen (17);
- Vergleichen eines Ergebnisses jeder Kommunikation mit einer Datenbank (23) weiterer Vorrichtungen;
- Bestimmen des Standorts des elektronischen Überwachungsarmbands (1) auf Basis des Vergleichs.

12. Verfahren nach Anspruch 11, wobei ein Ergebnis jeder Kommunikation mindestens eine Kennung der entsprechenden weiteren Vorrichtung (17) umfasst, die aus der Gruppe ausgewählt wird, die aus einer Übertragungsfrequenz, einem Typ der Signalcodierung, bei der Übertragung verwendeten Protokollen, mindestens einem Identifikationscode, wie etwa einer IP-Adresse, einem Vorrichtungsnamen, einem Vorrichtungstyp und einem Netzwerknamen, besteht.

13. Verfahren nach Anspruch 11 oder 12, das ferner das Bestimmen einer relativen Signalstärke zwischen mindestens zwei Signalen, die von entsprechenden weiteren Vorrichtungen (17) empfangen werden, umfasst, wobei diese relative Signalstärke mit der Datenbank (23) verglichen wird.

14. Verfahren nach einem der Ansprüche 11 bis 13, wobei die Datenbank (23) Informationen umfasst, die den geografischen Standort einer Vielzahl von weiteren Vorrichtungen (17) und mindestens eine der Kennungen, die mit jeder weiteren Vorrichtung (17) verknüpft ist, betreffen.

15. Verfahren nach einem der Ansprüche 11 bis 14, wobei die Datenbank (23) Informationen umfasst, die eine relative Signalstärke zwischen mindestens zwei Signalen, die von entsprechenden weiteren Vorrichtungen (17) ausgehen, betreffen, wobei die relative Signalstärke an einer Vielzahl von geografischen Standorten bestimmt wird.

## Revendications

1. Système de surveillance électronique (100) comprenant un bracelet de surveillance électronique (1) adapté pour être fixé autour d'un membre d'un utilisateur, le bracelet de surveillance électronique (1) comprenant une source d'énergie (5), une unité de traitement (7), un générateur d'identification (11), un système de localisation (12), et au moins un système de communication sans fil (9) adapté pour communiquer avec une station de base (15), **caractérisé en ce que** le système de communication sans fil (9) est adapté pour recevoir une communication à partir d'au moins un dispositif (17) supplémentaire basé au sol, et pour transmettre un résultat de cette communication à ladite station de base (15), ainsi qu'un signal d'identification généré par le générateur d'identification (11), afin de marquer ledit résultat avec l'identification du bracelet de surveillance électronique.

2. Système de surveillance électronique (100) selon la revendication 1, dans lequel le au moins un dispositif (17) supplémentaire est un système de capteur chimique (17) adapté pour effectuer un test afin de détecter une substance étrangère telle que de l'alcool, des produits pharmaceutiques ou des drogues, ledit système de capteur chimique (17) étant pourvu d'un système de communication sans fil supplémentaire adapté pour communiquer avec ledit au moins un système de communication sans fil (9) dans le bracelet de surveillance électronique (1).

3. Système de surveillance électronique (100) selon la revendication 2, comprenant en outre un système de verrouillage (19) adapté pour être installé dans un véhicule (21), le système de verrouillage (19) étant adapté pour communiquer sans fil avec ledit bracelet de surveillance électronique (1) afin de permettre ou d'empêcher l'utilisation du véhicule (21) sur la base d'un résultat dudit test.

4. Système de surveillance électronique (100) selon l'une des revendications 1 à 3, dans lequel le au moins un dispositif (17) supplémentaire est une balise sans fil adaptée pour être installée dans un bâtiment.

5. Système de surveillance électronique (100) selon l'une des revendications 1 à 4, dans lequel le au moins un dispositif (17) supplémentaire est un bracelet de surveillance électronique (1) supplémentaire, dans lequel chaque bracelet de surveillance électronique (1) est de préférence adapté pour communiquer un signal d'identification avec l'autre bracelet de surveillance électronique (1).

6. Procédé de réalisation d'une surveillance électronique d'un individu, comprenant les étapes consistant à :
- fournir un système de surveillance électronique (100) selon l'une des revendications 1 à 5 ;
- fixer le bracelet de surveillance électronique (1) autour d'un membre d'un utilisateur ;
- tenter d'initier une communication entre le bracelet de surveillance électronique (1) et ledit au moins un dispositif (17) supplémentaire ;
- initier une communication entre le bracelet de surveillance électronique (1) et la station de base (15) ;
- transmettre un résultat de ladite communication avec ledit au moins un dispositif (17) supplémentaire ainsi qu'un signal d'identification généré par le générateur d'identification (11), à une station de base (15), afin de marquer ledit résultat avec l'identification du bracelet de surveillance électronique ; et
- recevoir ledit résultat transmis par le système de communication sans fil (9) à la station de base (15).

7. Procédé selon la revendication 6, lorsqu'elle dépend de la revendication 2 ou 3, comprenant en outre les étapes consistant à :
- réaliser un test chimique au moyen du système de capteur chimique (17) ; ensuite
- transmettre un résultat dudit test au bracelet de surveillance électronique (1) ; ensuite
- réaliser ladite étape de transmission d'un résultat dudit test, ainsi que d'un signal d'identification généré par le générateur d'identification (11), à une station de base (15).

8. Procédé selon la revendication 6 ou 7, lorsqu'elle dépend de la revendication 3, comprenant en outre les étapes consistant à :
- réaliser un test chimique au moyen du système de capteur chimique (17) ; ensuite
- transmettre un résultat dudit test au bracelet de surveillance électronique (1) ; ensuite
- transmettre ledit résultat dudit test audit système de verrouillage ;
- permettre ou refuser l'utilisation dudit véhicule.

9. Procédé selon l'une des revendications 6 à 8, lorsqu'elle dépend de la revendication 5, comprenant en outre les étapes consistant à :
- recevoir, au niveau dudit bracelet de surveillance électronique (1), un signal d'identification provenant de l'autre bracelet de surveillance électronique (1) ;
- transmettre un signal d'identification reçu à partir de l'autre bracelet de surveillance électronique (1) à la station de base (15) ; et, facultativement, comprenant en outre les étapes consistant à :
- comparer le signal d'identification reçu à partir de l'autre bracelet de surveillance électronique (1) avec une liste de signaux d'identification associés à des individus avec lesquels l'utilisateur n'est pas autorisé à interagir ;
- si le signal d'identification reçu à partir de l'autre bracelet de surveillance électronique (1) est compris dans ladite liste, informer une autorité et/ou déclencher une alarme sonore et/ou visuelle sur le bracelet de surveillance électronique (1) de l'utilisateur.

10. Procédé selon la revendication 9, dans lequel ladite comparaison est effectuée dans le bracelet ou à distance, dans lequel ladite alarme est activée en réponse à une instruction envoyée via ladite station de base (15).

11. Procédé selon la revendication 6, comprenant en outre les étapes consistant à :
- recevoir une communication à partir d'une pluralité desdits dispositifs (17) supplémentaires ;
- comparer un résultat de chacune desdites communications avec une base de données (23) de dispositifs supplémentaires ;
- déterminer l'emplacement du bracelet de surveillance électronique (1) sur la base de ladite comparaison.

12. Procédé selon la revendication 11, dans lequel un résultat de chacune desdites communications comprend au moins un identifiant du dispositif (17) supplémentaire correspondant, choisi dans le groupe constitué d'une fréquence de transmission, un type de codage de signal, des protocoles utilisés dans la transmission, au moins un code d'identification tel qu'une adresse IP, un nom de dispositif, un type de dispositif et un nom de réseau.

13. Procédé selon la revendication 11 ou 12, comprenant en outre la détermination d'une intensité de signal relative entre au moins deux signaux reçus à partir de dispositifs (17) supplémentaires correspondants, cette intensité de signal relative étant comparée avec ladite base de données (23).

14. Procédé selon la revendication 11 à 13, dans lequel ladite base de données (23) comprend des informations relatives à l'emplacement géographique d'une pluralité de dispositifs (17) supplémentaires, et au moins un desdits identifiants associés avec chaque dispositif (17) supplémentaire.

15. Procédé selon l'une des revendications 11 à 14, dans lequel ladite base de données (23) comprend des informations relatives à une intensité de signal relative entre au moins deux signaux émanant de dispositifs (17) supplémentaires correspondants, ladite intensité de signal relative étant déterminée à une pluralité d'emplacements géographiques.
